# DEMANDE DE BREVET EUROPEEN

(11) **EP 4 717 964 A1**
(43) Date de publication de la demande: **01.04.2026**
(21) Numéro de dépôt: 25204643.8
(22) Date de dépôt: 25.09.2025
(51) Int. Cl.: F16L 25/14, F16L 7/02, F16L 27/107

(54) **MANCHETTE D'ÉTANCHÉITÉ, ENSEMBLE DE JONCTION TUBULAIRE, ASSEMBLAGE DE CONSTRUCTION INTÉGRÉE MODULAIRE ET PROCÉDÉ DE FABRICATION CORRESPONDANTS**

(30) Priorité: 27.09.2024 FR 2410344
(71) Demandeur: Fornacis France, 54700 Bouxières-sous-Froidmont (FR)
(72) Inventeur: HASSALL, Matthew, CANNOCK, WS11 8JS (GB); YAIR, David, BARCOMBE MILLS ROAD, BN8 5BL (GB); SUBRA, Renaud, 57000 METZ (FR)
(74) Mandataire: Lavoix

(57) **Abrégé**

La présente invention concerne une manchette d'étanchéité (44) pour jonction tubulaire d'un bout à emboîtement et d'un bout uni, la manchette d'étanchéité comprenant un corps de base (46) qui est muni d'un anneau d'emboîtement (48) adapté pour s'appliquer sur une surface extérieure du bout à emboîtement, d'un anneau uni (50) adapté pour s'appliquer sur une surface extérieure (34) du bout uni, et d'une portion de liaison (52) fermée et reliant l'anneau d'emboîtement à l'anneau uni. La manchette d'étanchéité (44) définit une configuration de repos, dans laquelle l'anneau uni (50) s'étend coaxialement par rapport à l'anneau d'emboîtement (48). La manchette d'étanchéité (44) définit une configuration de décalage dans laquelle l'anneau uni (50) est décalé radialement par rapport à l'anneau d'emboîtement (48).

Application aux assemblages de construction intégrée modulaire.

## Description

La présente invention concerne une manchette d'étanchéité pour jonction tubulaire d'un bout à emboîtement et d'un bout uni, la manchette d'étanchéité comprenant un corps de base qui est muni d'un anneau d'emboîtement adapté pour s'appliquer sur une surface extérieure du bout à emboîtement, d'un anneau uni adapté pour s'appliquer sur une surface extérieure du bout uni, et d'une portion de liaison fermée et reliant l'anneau d'emboîtement à l'anneau uni.

On connaît des dispositifs adaptés pour relier d'une manière étanche des éléments tubulaires. Un tel dispositif est par exemple connu de US6,394,505 qui divulgue une liaison adaptée pour relier un embout de sortie d'une toilette à un tuyau d'évacuation. Un dispositif destiné à relier un tuyau d'évacuation de faible diamètre à une colonne d'évacuation de grand diamètre est connu de FR1503921.

On connaît également une technologie de construction rapide de bâtiments appelée « construction intégrée modulaire » (en anglais « MiC » ou « modular integrated construction » (voir par exemple : https://mic.cic.hk/en/AboutMiC). Cette technologie comprend la préfabrication de modules de bâtiment en dehors du site de construction du bâtiment et leur assemblage sur le site de construction afin de former le bâtiment.

L'invention a pour but de permettre de manière économique l'établissement d'une liaison étanche entre un bout à emboîtement et un bout uni, notamment pour l'évacuation d'eaux usées ou pluviales dans les bâtiments et en particulier dans le cadre de la construction d'un bâtiment à partir de modules de bâtiment.

A cet effet, l'invention a pour objet une manchette d'étanchéité telle qu'indiquée ci-dessus, dans laquelle : la manchette d'étanchéité définit une configuration de repos, dans laquelle l'anneau uni s'étend coaxialement par rapport à l'anneau d'emboîtement ; la manchette d'étanchéité définit une configuration de décalage dans laquelle l'anneau uni est décalé radialement par rapport à l'anneau d'emboîtement ; la portion de liaison s'étend à l'intérieur de l'anneau d'emboîtement ; et la portion de liaison est axialement alignée avec l'anneau d'emboitement.

Selon des modes de réalisation particuliers de la manchette d'étanchéité, celle-ci peut comporter l'une ou plusieurs des caractéristiques suivantes :
- la manchette d'étanchéité admet un angle de décalage limite entre l'anneau uni et l'anneau d'emboîtement, notamment l'angle de décalage limite est au maximum 3° ou au maximum 1°45' ;
- la manchette d'étanchéité définit un sens d'emboîtement et l'anneau uni est décalé de l'anneau d'emboîtement dans le sens d'emboîtement ;
- dans la configuration de repos, la portion de liaison a une forme rétrécissant depuis l'anneau d'emboîtement vers l'anneau uni et notamment une forme sensiblement de tronc de cône ;
- la manchette d'étanchéité comprend l'une ou plusieurs des caractéristiques suivantes :
   . un organe de fixation d'emboîtement adapté pour serrer l'anneau d'emboîtement sur la surface extérieure du bout à emboîtement, et
   . un organe de fixation uni adapté pour maintenir ou serrer l'anneau uni sur la surface extérieure du bout uni ; et
- la manchette d'étanchéité comprend une lèvre frontale adaptée pour s'appliquer contre une surface frontale du bout uni.

L'invention a également pour objet un ensemble de jonction tubulaire, du type comprenant un premier élément tubulaire muni du bout à emboîtement, un second élément tubulaire muni du bout uni, et une manchette d'étanchéité adaptée pour relier de manière étanche le bout à emboîtement et le bout uni, le bout à emboîtement comportant une surface extérieure et le bout uni comprenant une surface extérieure, caractérisé en ce que la manchette d'étanchéité est une manchette d'étanchéité telle que définie ci-dessus, en ce que l'anneau d'emboîtement est adapté pour s'appliquer de manière étanche sur la surface extérieure du bout à emboîtement, et en ce que l'anneau uni est adapté pour s'appliquer de manière étanche sur la surface extérieure du bout uni.

Selon des modes de réalisation particuliers de l'ensemble de jonction tubulaire, celui-ci peut comporter l'une ou plusieurs des caractéristiques suivantes : le bout à emboîtement est muni d'une butée extérieure et notamment l'ensemble de jonction tubulaire comprend un anneau de fixation adapté pour fixer le bout à emboîtement et le bout uni par rapport à une paroi d'un bâtiment.

L'invention a également pour objet un assemblage de construction intégrée modulaire, du type comprenant un premier module de bâtiment muni d'une première structure de module de bâtiment, et un second module de bâtiment muni d'une seconde structure de module de bâtiment, caractérisé en ce que l'assemblage de construction intégrée modulaire comprend un ensemble de jonction tubulaire tel que défini ci-dessus, en ce que le premier élément tubulaire est fixé à la première structure de module de bâtiment, et en ce que le second élément tubulaire est fixé à la seconde structure de module de bâtiment.

Selon des modes de réalisation particuliers de l'assemblage, celui-ci peut comporter l'une ou plusieurs des caractéristiques suivantes : le premier module de bâtiment et le second module de bâtiment sont disposés l'un sur l'autre, notamment le second module de bâtiment est disposé sur le premier module de bâtiment.

L'invention a également pour objet un procédé de fabrication d'une jonction tubulaire comprenant les étapes successives suivantes :
fourniture d'un ensemble de jonction tubulaire tel que défini ci-dessus ;
enfichage de l'anneau d'emboîtement sur le bout à emboîtement ;
fixation de la manchette d'étanchéité sur le bout à emboîtement ; et
insertion du bout uni dans l'anneau uni.

L'invention sera mieux comprise à la lecture de la description qui va suivre, donnée uniquement à titre d'exemple et faite en se référant aux dessins annexés, sur lesquels :
- La Figure 1 montre schématiquement en coupe verticale une partie d'un assemblage de construction intégrée modulaire selon l'invention comprenant une jonction tubulaire selon l'invention ;
- La Figure 2 montre une vue en perspective et partiellement arrachée de la jonction tubulaire de la Figure 1 ;
- La Figure 3 montre, selon une vue analogue à celle de la Figure 1, une variante d'une partie d'un assemblage de construction intégrée modulaire selon l'invention ; et
- La Figure 4 montre une vue en perspective et partiellement arrachée d'une jonction tubulaire selon une variante de l'invention.

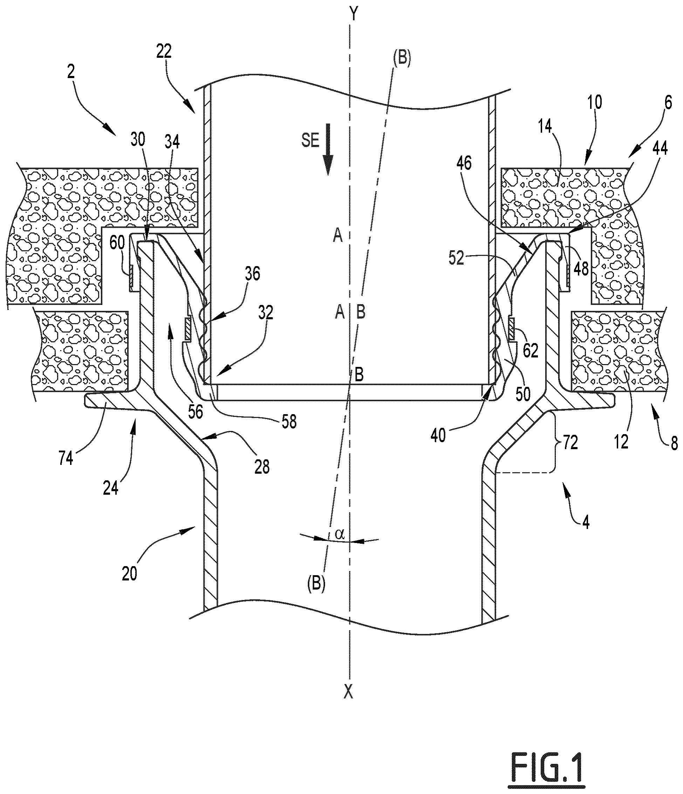

Sur la Figure 1 est représentée de manière schématique une partie d'un assemblage de construction intégrée modulaire selon l'invention, désigné par la référence générale 2. L'assemblage de construction intégrée modulaire 2 forme par exemple un bâtiment d'habitation ou de bureaux. L'assemblage de construction intégrée modulaire 2 comprend un premier module de bâtiment 4 et un second module de bâtiment 6.

Avant la formation de l'assemblage de construction intégrée modulaire 2, chaque module de bâtiment 4 ou 6 est adapté pour être déplacé et manipulé indépendamment de chacun des autres modules de bâtiment. Chaque module de bâtiment comprend, et ceci également avant la formation de l'assemblage de construction intégrée modulaire, des éléments d'installation, tel que des tuyaux, ou des éléments de finition, tels que des carrelages. Chaque module de bâtiment 4 ou 6 est donc avant la formation de l'assemblage de construction intégrée modulaire 2 un sous-ensemble.

Le premier module de bâtiment 4 est muni d'une première structure de module de bâtiment 8 et le second module de bâtiment 6 est muni d'une seconde structure de module de bâtiment 10.

Chaque structure de module de bâtiment comprend par exemple au moins un plafond ou un sol et un ou plusieurs murs. Sur la Figure 1 est illustré à titre d'exemple le plafond 12 de la première structure de module de bâtiment 8 et le sol 14 de la seconde structure de module de bâtiment 10.

La Figure 1 correspond à une orientation généralement verticale de l'assemblage de construction intégrée modulaire 2. Dans l'exemple illustré, le premier module de bâtiment 4 est un module de bâtiment inférieur et le second module de bâtiment 6 est un module de bâtiment supérieur. Le premier module de bâtiment 4 et le second module de bâtiment 6 sont donc disposés l'un sur l'autre, en l'occurrence le second module de bâtiment 6 étant disposé sur le premier module de bâtiment 4.

Le premier module de bâtiment 4 comprend un premier élément tubulaire 20 qui est par exemple fixé à la première structure de module de bâtiment 8. De même, le second module de bâtiment 6 comprend un second élément tubulaire 22 qui est par exemple fixé à la seconde structure de module de bâtiment 10. Avantageusement, le premier élément tubulaire 20 est fixé à la première structure de module de bâtiment 8 et le second élément tubulaire 22 est fixé à la seconde structure de module de bâtiment 10 déjà avant assemblage ensemble des modules de bâtiment 4 et 6.

Le premier élément tubulaire 20 est un tuyau, en l'occurrence un tuyau inférieur, et le second élément tubulaire 22 est un tuyau, en l'occurrence un tuyau supérieur. En variante non-représentée, le premier élément tubulaire 20 et/ou le second élément tubulaire 22 peu(ven)t être un ou des raccord(s) tubulaire(s). Le premier élément tubulaire 20 et le second élément tubulaire 22 ont avantageusement le même diamètre nominal DN, par exemple un diamètre nominal DN allant de 10mm à 300mm. Le premier élément tubulaire 20 peut cependant avoir un diamètre nominal DN jusqu'à 50mm supérieur à celui du second élément tubulaire 22. Le premier élément tubulaire 20 et/ou le second élément tubulaire 22 est ou sont par exemple en métal, notamment en fonte. Le premier élément tubulaire 20 et le second élément tubulaire 22 sont par exemple des éléments d'une canalisation d'évacuation d'eaux usées ou d'évacuation d'eaux pluviales.

Le premier élément tubulaire 20 est muni d'un bout à emboîtement 24. Le bout à emboîtement 24 comporte une surface extérieure 26, une surface intérieure 28 et une surface frontale 30. Le bout à emboîtement 24 s'étend autour d'un axe central X-X de bout à emboîtement.

Le second élément tubulaire 22 est muni d'un bout uni 32. Le bout uni 32 comporte une surface extérieure 34, une surface intérieure 36 et une surface frontale 40. Le bout uni 32 s'étend autour d'un axe central Y-Y de bout uni.

L'axe central Y-Y s'étend, dans la configuration illustrée sur la Figure 1, coaxialement à l'axe central X-X. Toutefois, selon des tolérances de fabrication et d'assemblage, l'axe central Y-Y est éventuellement décalé radialement par rapport à l'axe central X-X et ceci jusqu'à une distance de décalage maximum DM. La distance de décalage maximum DM est par exemple de 20mm ou de 10mm.

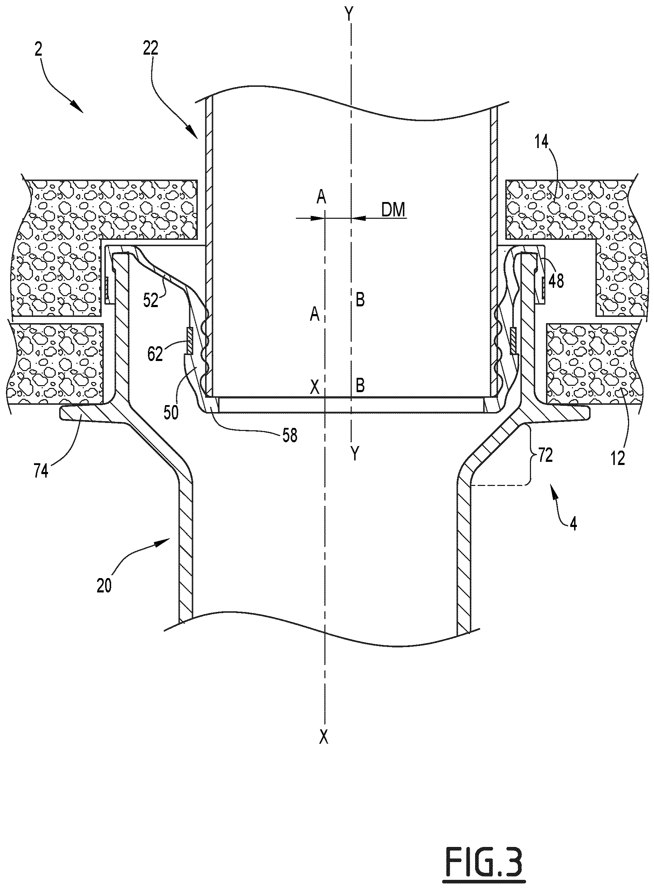

Cette configuration est illustrée à titre d'exemple sur la Figure 3. Sur cette Figure 3, le second module de bâtiment 6 est assemblé avec le premier module de bâtiment 4 avec un décalage, en l'occurrence horizontal, par rapport à l'assemblage aligné de la Figure 1. En conséquence, le premier élément tubulaire 20 et le second élément tubulaire 22 sont également décalés l'un de l'autre sur la variante de la Figure 3.

Par ailleurs, de manière non-représentée, selon des tolérances de fabrication et d'assemblage, l'axe central Y-Y est éventuellement décalé angulairement par rapport à l'axe central X-X et ceci jusqu'à un angle de décalage maximum. Cet angle de décalage maximum varie en fonction du diamètre nominal des tuyaux et peut par exemple être de 3° pour un diamètre nominal inférieur ou égal à 200mm et de 1°45' pour des diamètres nominaux plus élevés.

Le premier élément tubulaire 20 est disposé sur la première structure de module de bâtiment 8 et le second élément tubulaire 22 est disposé sur la seconde structure de module de bâtiment 10 de sorte telle que, simultanément avec l'opération d'assemblage du second module de bâtiment 6 avec le premier module de bâtiment 4, le bout uni 32 s'emboîte dans le bout à emboîtement 24.

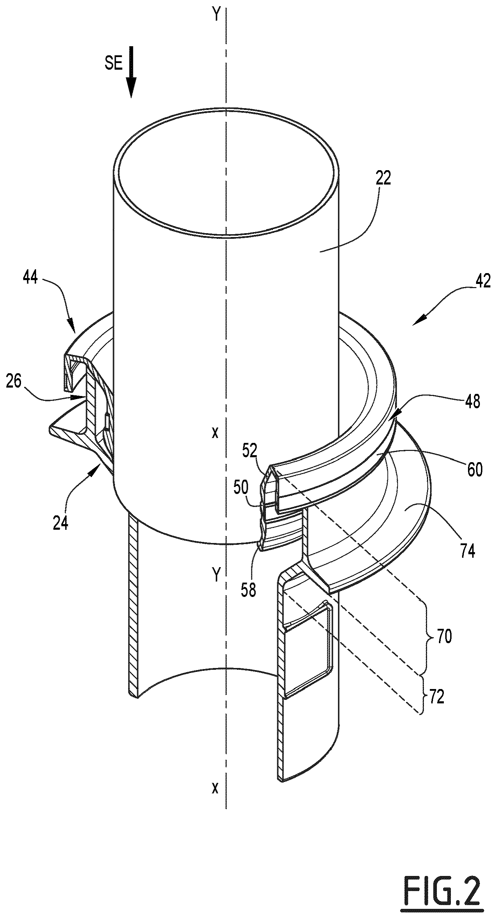

L'assemblage de construction intégrée modulaire 2 comprend un ensemble de jonction tubulaire 42. A l'état assemblé, tel que représente sur les Figures 1 à 3, l'ensemble de jonction tubulaire 42 forme ou est une jonction tubulaire. Cet ensemble de jonction tubulaire 42 comprend le premier élément tubulaire 20, le second élément tubulaire 22 et une manchette d'étanchéité 44. La manchette d'étanchéité 44 est adaptée pour relier de manière étanche le bout à emboîtement 24 et le bout uni 32.

A l'état assemblé de l'assemblage de construction intégrée modulaire 2 et donc de la jonction tubulaire, la manchette d'étanchéité 44 relie le bout à emboîtement 24 et le bout uni 32 de manière étanche et ceci même lorsque le bout à emboîtement 24 et le bout uni 32 sont décalés radialement l'un de l'autre de la distance de décalage maximum DM. Par ailleurs, la manchette d'étanchéité 44 relie le bout à emboîtement 24 et le bout uni 32 de manière étanche même lorsque le bout à emboîtement 24 et le bout uni 32 sont décalés angulairement l'un de l'autre de l'angle de décalage maximum.

Cette étanchéité est une étanchéité à l'eau lors d'une surpression d'au moins 0,3 bar ou d'au moins 0,5 bar. Alternativement, cette étanchéité est une étanchéité à l'eau lors d'une surpression d'au moins 1 bar. De préférence, notamment dans ce dernier cas, l'organe de fixation d'emboîtement 60 ou l'organe de fixation uni 62 (voir ci-après) est/sont utilisés afin de contribuer à la tenue en pression.

La manchette d'étanchéité 44 est une manchette d'étanchéité pour jonction tubulaire. La manchette d'étanchéité 44 comprend un corps de base 46. Le corps de base 46 est par exemple en matière élastique ayant une dureté Shore A comprise par exemple entre 40 et 80, notamment comprise entre 50 et 70, par exemple en matière élastomère. Le corps de base 46 est de préférence en EPDM.

Le corps de base 46 comprend un anneau d'emboîtement 48, adapté pour s'appliquer sur la surface extérieure 26 du bout à emboîtement 24, un anneau uni 50 adapté pour s'appliquer sur la surface extérieure 34 du bout uni 32, et une portion de liaison 52 fermée et reliant de manière étanche l'anneau d'emboîtement 48 à l'anneau uni 50.

L'anneau d'emboîtement 48 définit un axe central A-A et l'anneau uni 50 définit un axe central B-B. A l'état non monté, l'axe central A-A s'étend coaxialement à l'axe central X-X et l'axe central B-B s'étend coaxialement à l'axe central Y-Y.

La manchette d'étanchéité 44 définit une configuration de repos dans laquelle l'anneau uni 50 s'étend coaxialement par rapport à l'anneau d'emboîtement 48. Cette configuration de repos est celle représentée sur la Figure 1. La configuration de repos est la configuration que prend la manchette d'étanchéité 44 lorsqu'elle n'est pas soumise à une contrainte extérieure visant à décaler l'anneau uni 50 par rapport à l'anneau d'emboîtement 48. Cette configuration de repos correspond par exemple à l'état non monté de la manchette d'étanchéité. La manchette d'étanchéité 44 définit également une configuration de décalage dans laquelle l'anneau uni 50 est décalé radialement par rapport à l'anneau d'emboîtement 48.

La portion de liaison 52 s'étend à l'intérieur de l'anneau d'emboîtement 48. La portion de liaison 52 est axialement alignée avec l'anneau d'emboitement 48.

Dans la configuration de repos, la portion de liaison 52 a une forme rétrécissant depuis l'anneau d'emboîtement 48 vers l'anneau uni 50. En l'occurrence cette forme rétrécissant est une forme de tronc de cône.

La manchette d'étanchéité 44 admet également une configuration de décalage angulaire entre l'axe central B-B de l'anneau uni 50 et l'axe central A-A de l'anneau d'emboîtement 48, jusqu'à un angle de décalage limite pour lequel la jonction entre les éléments tubulaires est encore étanche. L'angle de décalage limite admis est le même que l'angle de décalage maximum précité et est donc dans le cas présent au maximum 3° ou au maximum 1°45' selon les diamètres nominaux des tuyaux. L'angle de décalage limite est indiqué schématiquement et de manière exagérée en tant qu'angle α entre un axe (B) - (B) et l'axe A-A sur la Figure 1.

La manchette d'étanchéité 44 définit un sens d'emboîtement SE. En l'occurrence, le sens d'emboîtement SE est le sens d'introduction du bout uni 32 dans le bout à emboîtement 24 et s'étend selon l'axe central A-A et/ou B-B. L'anneau uni 50 est décalé de l'anneau d'emboîtement 48 dans le sens d'emboîtement SE, donc axialement selon l'axe central.

En d'autres termes, la manchette d'étanchéité 44 comprend une extrémité recevant le bout à emboîtement définie par l'anneau d'emboîtement 48 et une extrémité recevant le bout uni définie par l'anneau uni 50. Le sens d'emboîtement SE est dirigé de l'extrémité recevant le bout à emboîtement vers l'extrémité recevant le bout uni.

A l'état monté de la manchette d'étanchéité 44, le corps de base 46 s'étend partiellement à l'intérieur du bout à emboîtement 24 et délimite une cavité interne 56 entre ce corps de base 46 et le bout à emboîtement 24. La cavité interne 56 est ouverte vers le premier élément tubulaire 20 de telle sorte que lors de l'établissement d'une surpression dans l'élément tubulaire 20, l'anneau uni 50 est serré contre le bout uni par l'action de la surpression. En l'occurrence, la cavité interne 56 est délimitée par l'anneau uni 50 et la portion de liaison 52.

La manchette d'étanchéité 44 comprend par ailleurs une lèvre frontale 58 adaptée pour s'appliquer contre la surface frontale 40 du bout uni. La lèvre frontale 58 est un rebord faisant radialement saillie vers l'intérieur depuis l'anneau uni 50. A l'état monté, la surface frontale 40 du bout uni s'applique sur la lèvre frontale 58. La lèvre frontale 58 peut s'appliquer contre le bout à emboîtement 24, auquel cas la lèvre frontale 58 contribue à l'étanchéité entre le bout uni et le bout à emboîtement. La lèvre frontale 58 est également un amortisseur acoustique, adapté pour réduire ou empêcher la génération de vibrations ou de bruits par un contact entre le premier élément tubulaire 20 et le second élément tubulaire 22. La lèvre frontale 58 est également adaptée pour protéger le bout à emboîtement 24 et le bout uni 32 d'une usure ou cassure potentiellement générée par un contact direct entre le bout à emboîtement 24 et le bout uni 32.

La manchette d'étanchéité 44 est avantageusement munie d'un organe de fixation d'emboîtement 60, adapté pour serrer l'anneau d'emboîtement 48 sur la surface extérieure du bout à emboîtement 24. En l'occurrence, l'organe de fixation d'emboîtement 60 est une bague de maintien en métal assurant un contact entre le corps de base 46 et le bout à emboîtement 24 à l'état emboîté.

La manchette d'étanchéité 44 est avantageusement munie d'un organe de fixation uni 62, adapté pour maintenir ou serrer l'anneau uni 50 sur la surface extérieure du bout uni. En l'occurrence, l'organe de fixation uni 62 est une bague de maintien en métal assurant un contact entre le corps de base 46 et le bout uni 32 à l'état emboîté.

L'anneau d'emboîtement 48 est adapté pour s'appliquer de manière étanche sur la surface extérieure du bout à emboîtement 24. A cet effet, l'anneau d'emboîtement 48 comprend avantageusement au moins une lèvre d'étanchéité intérieure. L'anneau uni 50 est adapté pour s'appliquer de manière étanche sur une surface extérieure du bout uni. A cet effet, l'anneau uni 50 comprend avantageusement au moins une lèvre d'étanchéité intérieure. L'étanchéité précitée est dans les deux cas une étanchéité au moins à l'eau de ruissellement et/ou à une surpression d'au moins 0,3 bar.

Le bout à emboîtement 24 comprend une portion d'emboîtement 70 et une portion de fond 72. La portion d'emboîtement 70 est sensiblement cylindrique et la portion de fond 72 est sensiblement conique en se rétrécissant dans le sens d'emboîtement SE. La lèvre frontale 58 est adaptée pour s'appliquer contre la portion de fond 72.

Le bout à emboîtement 24 est avantageusement muni d'une butée extérieure 74, sous forme d'une collerette extérieure. Cette butée extérieure 74 est adaptée pour limiter le déplacement du premier élément tubulaire 20 par rapport à la première structure de module de bâtiment 8, et par exemple par rapport à un plafond. En l'occurrence, la butée extérieure 74 est située du côté de la première structure de module de bâtiment 8 opposé au premier module de bâtiment 6. Alternativement, la butée extérieure 74 est incorporée dans la première structure de module de bâtiment 8 ou dans le plafond 12. Encore alternativement la butée extérieure 74 est située du côté de la première structure de module de bâtiment 8 dirigé vers le premier module de bâtiment 6.

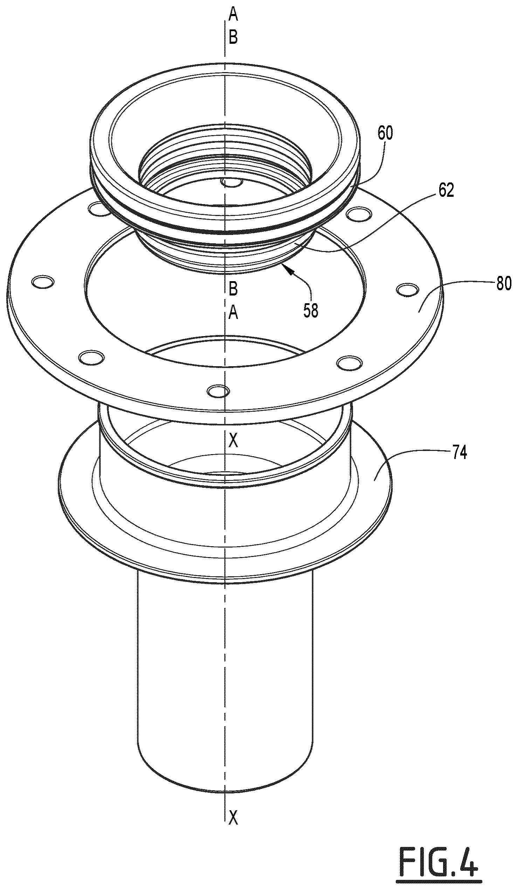

L'ensemble de jonction tubulaire 42 comprend par ailleurs, optionnellement, un anneau de fixation 80 (voir Figure 4) adapté pour fixer le bout à emboîtement 24 et le bout uni 32 par rapport à une paroi d'un bâtiment. L'anneau de fixation 80 est par exemple disposé du côté de la première structure de module de bâtiment 8 dirigé vers le premier module de bâtiment 6 et la butée extérieure 74 est disposée du même côté et est prise en sandwich entre l'anneau de fixation 80 et le plafond 12. Alternativement, l'anneau de fixation 80 et la butée extérieure 74 sont disposés du côté de la première structure de module de bâtiment 8 opposé au premier module de bâtiment 6, la butée extérieure étant prise en sandwich entre l'anneau de fixation 80 et le plafond 12.

L'assemblage de construction intégrée modulaire 2 est établi de la manière suivante.

Tout d'abord, le premier module de bâtiment 4 et le second module de bâtiment 6 sont fournis. Dans cet état, le premier élément tubulaire 20 est à l'état fixé à la première structure de module de bâtiment 8 et le second élément tubulaire 22 est à l'état fixé à la seconde structure de module de bâtiment 10.

Le bout uni 32 est à l'état non-emboîté dans le bout à emboîtement 24.

L'organe de fixation 62 est le cas échéant mis en place sur l'anneau uni 50.

La manchette d'étanchéité 44 est fixée sur le bout à emboîtement en enfichant l'anneau d'emboîtement 48 sur le bout à emboîtement. Le cas échéant, l'organe de fixation d'emboîtement 60 est mis en place sur l'anneau d'emboîtement 48 et serre l'anneau d'emboîtement 48 contre le bout à emboîtement.

La manchette d'étanchéité 44 est alors dans sa configuration de repos.

Ensuite, le second module de bâtiment 6 est posé sur le premier module de bâtiment 4 selon le sens d'emboîtement SE. Lors de cette étape de pose, le bout uni 32 est inséré selon le sens d'emboîtement SE dans le bout à emboîtement 24. Avant insertion, le bout uni 32 se trouve éventuellement dans une position de décalage radial par rapport au bout à emboîtement 24. Dans ce cas, lors de l'insertion du bout uni 32 dans le bout à emboîtement 24, l'anneau uni 50 se décale radialement par rapport à l'anneau d'emboîtement jusqu'à ce que l'anneau uni soit radialement aligné avec le bout uni 32 et donc coaxial par rapport à celui-ci. Il en est de même concernant un éventuel décalage angulaire du bout uni 32 par rapport au bout à emboîtement 24. Lorsque l'anneau uni 50 est aligné avec le bout uni 32, le bout uni 32 est inséré dans l'anneau uni 50.

En tout état de cause, l'organe de fixation uni 62 maintient ou serre l'anneau uni 50 contre le bout uni 32. L'organe de fixation uni 62 peut être précontraint ou serré après la mise en place.

D'une manière générale, selon l'invention, un procédé de fabrication d'une jonction tubulaire selon l'invention comprend les étapes successives suivantes :
fourniture de l'ensemble de jonction tubulaire 42 ;
enfichage de l'anneau d'emboîtement 48 sur le bout à emboîtement 24 ,
fixation de la manchette d'étanchéité 44 sur le bout à emboîtement 24, et
insertion du bout uni 32 dans l'anneau uni 50,
obtenant ainsi la jonction tubulaire.

En variante, l'ensemble de jonction tubulaire 42, respectivement la jonction tubulaire, ne fait pas partie d'un assemblage de construction intégrée modulaire 2 mais est utilisé(e) dans un autre contexte technique. Par exemple, l'ensemble de jonction tubulaire 42 ou la jonction tubulaire fait partie d'une canalisation d'évacuation d'eaux pluviales ou d'eaux usées d'un bâtiment non-modulaire. Dans ce cas, la structure du bâtiment est établie au préalable et ensuite l'ensemble de jonction tubulaire 42 est fixé à la structure de bâtiment en formant la jonction tubulaire.

La description qui précède contient des caractéristiques techniques de l'invention. Ces caractéristiques techniques, bien que présentées dans un contexte technique et éventuellement en combinaison avec d'autres caractéristiques techniques, peuvent être utilisées à chaque fois individuellement, sans les autres caractéristiques techniques, pour autant que ceci soit techniquement possible.

## Revendications

1. Manchette d'étanchéité (44) pour jonction tubulaire d'un bout à emboîtement et d'un bout uni, la manchette d'étanchéité comprenant un corps de base (46) qui est muni
- d'un anneau d'emboîtement (48) adapté pour s'appliquer sur une surface extérieure (26) du bout à emboîtement,
- d'un anneau uni (50) adapté pour s'appliquer sur une surface extérieure (34) du bout uni, et
- d'une portion de liaison (52) fermée et reliant l'anneau d'emboîtement à l'anneau uni,
**caractérisée en ce que**
- la manchette d'étanchéité (44) définit une configuration de repos, dans laquelle l'anneau uni (50) s'étend coaxialement par rapport à l'anneau d'emboîtement (48) ;
- la manchette d'étanchéité (44) définit une configuration de décalage dans laquelle l'anneau uni (50) est décalé radialement par rapport à l'anneau d'emboîtement (48) ;
- la portion de liaison (52) s'étend à l'intérieur de l'anneau d'emboîtement (48) ; et
- la portion de liaison (52) est axialement alignée avec l'anneau d'emboitement (48).

2. Manchette d'étanchéité selon la revendication 1, dans laquelle la manchette d'étanchéité (44) admet un angle de décalage limite entre l'anneau uni (50) et l'anneau d'emboîtement (48), notamment dans laquelle l'angle de décalage limite est au maximum 3° ou au maximum 1°45'.

3. Manchette d'étanchéité selon la revendication 1 ou 2, dans laquelle la manchette d'étanchéité (44) définit un sens d'emboîtement (SE) et dans laquelle l'anneau uni (50) est décalé de l'anneau d'emboîtement (48) dans le sens d'emboîtement.

4. Manchette d'étanchéité selon l'une quelconque des revendications 1 à 3, dans laquelle, dans la configuration de repos, la portion de liaison (52) a une forme rétrécissant depuis l'anneau d'emboîtement (48) vers l'anneau uni (50) et notamment une forme sensiblement de tronc de cône.

5. Manchette d'étanchéité selon l'une quelconque des revendications précédentes, dans laquelle la manchette d'étanchéité comprend l'une ou plusieurs des caractéristiques suivantes :
- un organe de fixation d'emboîtement (60) adapté pour serrer l'anneau d'emboîtement sur la surface extérieure (26) du bout à emboîtement, et
- un organe de fixation uni (62) adapté pour maintenir ou serrer l'anneau uni sur la surface extérieure (34) du bout uni.

6. Manchette d'étanchéité selon l'une quelconque des revendications précédentes, dans laquelle la manchette d'étanchéité comprend une lèvre frontale (58) adaptée pour s'appliquer contre une surface frontale (40) du bout uni.

7. Ensemble de jonction tubulaire (42), du type comprenant
- un premier élément tubulaire (20) muni du bout à emboîtement (24),
- un second élément tubulaire (22) muni du bout uni (32), et
- une manchette d'étanchéité adaptée pour relier de manière étanche le bout à emboîtement et le bout uni,
le bout à emboîtement comportant une surface extérieure (26) et le bout uni comprenant une surface extérieure (34),
**caractérisé en ce que**
la manchette d'étanchéité est une manchette d'étanchéité (44) selon l'une quelconque des revendications précédentes, **en ce que**
l'anneau d'emboîtement (48) est adapté pour s'appliquer de manière étanche sur la surface extérieure (26) du bout à emboîtement, et
**en ce que** l'anneau uni (50) est adapté pour s'appliquer de manière étanche sur la surface extérieure (34) du bout uni.

8. Ensemble de jonction tubulaire selon la revendication 7, dans lequel le bout à emboîtement (24) est muni d'une butée extérieure (74) et notamment l'ensemble comprend un anneau de fixation (80) adapté pour fixer le bout à emboîtement et le bout uni par rapport à une paroi d'un bâtiment.

9. Assemblage de construction intégrée modulaire (2), du type comprenant
- un premier module de bâtiment (4) muni d'une première structure de module de bâtiment (8), et
- un second module de bâtiment (6) muni d'une seconde structure de module de bâtiment (10),
**caractérisé en ce que**
l'assemblage de construction intégrée modulaire comprend un ensemble de jonction tubulaire (42) selon l'une quelconque des revendications 7 ou 8, **en ce que**
le premier élément tubulaire (20) est fixé à la première structure de module de bâtiment, et **en ce que**
le second élément tubulaire (22) est fixé à la seconde structure de module de bâtiment.

10. Assemblage de construction intégrée modulaire selon la revendication 9, dans lequel le premier module de bâtiment (4) et le second module de bâtiment (6) sont disposés l'un sur l'autre, notamment le second module de bâtiment (6) est disposé sur le premier module de bâtiment (4).

11. Procédé de fabrication d'une jonction tubulaire comprenant les étapes successives suivantes :
fourniture d'un ensemble de jonction tubulaire (42) selon la revendication 7 ou 8 ;
enfichage de l'anneau d'emboîtement (48) sur le bout à emboîtement (24) ;
fixation de la manchette d'étanchéité (44) sur le bout à emboîtement ; et
insertion du bout uni (32) dans l'anneau uni (50).
